# FASCICULE DE BREVET EUROPEEN

(11) **EP 2 103 395 B1**
(45) Date de publication et mention de la délivrance du brevet: **28.07.2010**
(21) Numéro de dépôt: 09305147.2
(22) Date de dépôt: 16.02.2009
(51) Int. Cl.: B25F 5/00, B24B 23/02, H02K 9/26

(54) **Dispositif de protection de poussières et autres matériaux pour appareils electroportatifs**
Schutzvorrichtung gegen Staub und andere Stoffe für elektrische Handwerkzeuge
Protective device against dust and other materials for portable electric power tool

(30) Priorité: 12.03.2008 FR 0851611
(43) Date de publication de la demande: 23.09.2009
(73) Titulaire: M.B.H. Developpement, 42640 Saint Romain la Motte (FR)
(72) Inventeur: Bottazzi, Marc, 42120 Saint Vincent de Boisset (FR)
(74) Mandataire: Dupuis, François

(56) Documents cités:
- EP-A- 1 658 936
- US-A- 3 840 762

## Description

La présente invention se rapporte à un dispositif de protection de poussières et autres matériaux pour appareils électroportatifs selon le préambule de la revendication 1. Un tel dispositif est connu du document EP 1 658 936. Il est bien connu d'utiliser des appareils électroportatifs en vue d'effectuer des opérations d'entretien, de meulage, de ponçage, de surfaçage, de perçage et autres, et ce, dans un milieu environnemental générant des poussières et autres détritus. Ces opérations s'effectuent aussi en présence de matériaux disposés au sol du type sable et autres qui peuvent être nécessaires à certains travaux de chantier. L'analyse des conditions d'utilisation de ce type de matériel montre que le ou les opérateurs ont une tendance à le déposer au sol en cas de non utilisation provisoire, et les appareils s'ouvrent à une situation potentielle d'encrassement et de détérioration résultant de cette promiscuité.

Par ailleurs, lors des opérations de fonctionnement des appareils électroportatifs, les matières, particules, poussières et autres ont une tendance à venir encrasser le bloc moteur ou turbine.

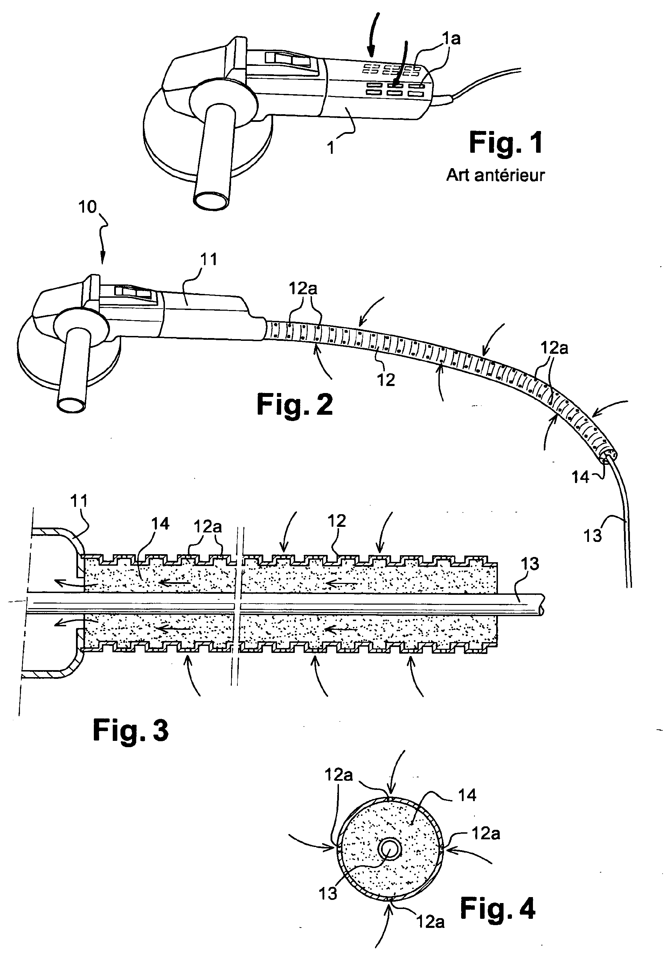

La raison en est que ces appareils électroportatifs utilisent un groupe moteur, commercialisé par de très nombreuses marques de fabricants, relié à une source d'énergie électrique par un câble approprié à un carter de protection (1) muni d'ouïes ou d'évents (1a) de ventilation, comme représenté figure 1 qui est censé protéger le groupe moteur ou turbine. En pratique, et selon les conditions d'utilisation de ces appareils, le milieu ambiant génère des particules, détritus et des matériaux disposés au sol du type sable ou autres sont susceptibles de pénétrer dans le collecteur par le biais de tels évents. Cela créé une réelle gêne avec un encrassement du collecteur exigeant un entretien et un nettoyage de l'appareil électroportatif. Cette gêne est significative et requiert un nettoyage régulier du collecteur de l'appareil entraînant une mise en service temporaire.

La démarche du Demandeur a donc été de réfléchir à un nouveau concept en vue de la protection de ces appareils électroportatifs, concept qui soit très efficace dans le milieu ambiant considéré, et par rapport à l'état au sol et environnemental du chantier.

La solution apportée est simple, pratique à mettre en oeuvre, peu coûteuse et fiable.

Selon la caractéristique de l'invention, le dispositif de protection de poussières et autres matériaux pour appareils électroportatifs est remarquable en ce qu'il comprend un carter de protection, s'adaptant autour du collecteur de l'appareil électroportatif, et ne présentant aucune ouverture ou évent susceptible de favoriser le prélèvement et l'introduction de poussières ou déchets à l'intérieur, et en ce que le carter s'ajuste par son extrémité avant sur la tête de l'appareil électroportatif et à l'opposé permet le maintien d'un flexible de grande longueur à l'intérieur duquel est disposé le conduit électrique, et en ce que le flexible présente sur sa longueur une multitude de perforations établies dans son épaisseur, et en ce que le flexible reçoit intérieurement une garniture de mousse de polyuréthane autorisant le passage d'un cordon électrique, et en ce que le nombre de perforations formées sur le flexible génère une surface additionnelle cumulée de passage d'air supérieure à la section d'arrivée d'air vers la turbine du groupe moteur.

Ces caractéristiques et d'autres encore ressortiront bien de la suite de la description.

Pour fixer l'objet de l'invention illustrée d'une manière non limitative aux figures des dessins où :
- la figure 1 est une vue à titre d'exemple de l'appareil électroportatif destiné à des travaux de ponçage, meulage ou autre, selon l'art antérieur.
- la figure 2 est une vue du dispositif de protection des appareils électroportatifs, selon l'invention.
- la figure 3 est une vue partielle en coupe selon la ligne A-A à grande échelle illustrant le conduit de liaison de l'appareil protégeant le câble électrique de raccordement.
- la figure 4 est une vue de face de l'extrémité du conduit de liaison.

Afin de rendre plus concret l'objet de l'invention, on le décrit maintenant d'une manière non limitative illustrée aux figures des dessins.

On a représenté un appareil électroportatif (10) à titre d'exemple non limitatif sous forme de ponceuse aspirante. Cependant, dans le cadre de l'invention, cette application est donnée pour permettre la compréhension de l'invention et n'est donc pas limitative.

L'appareil peut être une ponceuse, meuleuse, surfaceuse, perceuse ou autre, leur partie commune essentielle étant qu'elles incluent un bloc moteur générant une force de puissance à la partie outil par tous moyens connus. Le bloc moteur peut être du type à dépression tel que décrit dans le brevet européen n° 1815942, avec utilisation d'une turbine tournant à grande vitesse.

Selon l'invention, le dispositif de protection est remarquable en ce qu'il met en oeuvre un carter (11) de protection, s'adaptant autour du collecteur de l'appareil électroportatif, et ne présentant aucune ouverture ou évent susceptible de favoriser le prélèvement et l'introduction de poussières ou déchets à l'intérieur. Il n'y a donc aucune zone et passage d'air formé sur le carter, ni de détritus, ni de matériaux.

Le carter est donc fermé à l'aide de tous moyens de fixation appropriés. Ce carter s'ajuste par son extrémité avant sur la tête de l'appareil électroportatif et à l'opposé permet le maintien d'un flexible (12) de grande longueur à l'intérieur duquel est disposé le conduit électrique (13). Ce flexible de grande longueur, établi de toute manière appropriée, est cannelé ou non et présente sur sa longueur une multitude de perforations (12a) établies dans son épaisseur. Cette disposition peut être faite dans une configuration en alignement ou autre, en une ou plusieurs lignes parallèles ou autres, en autorisant un passage d'air à l'intérieur du flexible et conduisant vers le groupe moteur-turbine, selon les caractéristiques de l'appareil électroportatif.

Afin d'éviter le phénomène de courant d'air ou de dépression, le nombre de trous formés sur le flexible génère une surface additionnelle cumulée de passage d'air (y) supérieure à la section d'arrivée d'air (x) vers la turbine du groupe moteur.

Ainsi, il est donné ci-après des indications du nombre de trous par rapport à un diamètre d'entrée d'air de l'appareil. Pour un diamètre de 32 mm de la section d'entrée d'air, il faut réaliser sur le flexible environ 250 trous de 1 mm de diamètre. La surface totale (y) des trous cumulés établis sur le flexible doit donc être supérieure à la surface (x) en section d'entrée d'air vers la partie moteur ou turbine de l'appareil électroportatif. Cette équation est essentielle pour permettre un bon fonctionnement du dispositif de l'invention, car y > x permet d'éviter tout phénomène de dépression.

Pour éviter l'introduction de matières dans le flexible lors de la dépose au sol de l'appareil, le flexible (12) reçoit sur tout ou partie de sa longueur une garniture intérieure (14) en mousse de polyuréthanne, engagée serrée, et qui entoure également le cordon électrique. Cette garniture évite l'introduction de poussières, détritus ou autres matériaux à l'intérieur du flexible, y compris lorsque l'appareil électroportatif est posé au sol dans un milieu de matières ou matériaux, sable ou autres, nécessaires à la mise en oeuvre d'un chantier.

La garniture intérieure (14) est choisie de telle sorte qu'elle ait une certaine rigidité.

Les avantages ressortent bien de l'invention. On souligne la protection améliorée du groupe moteur ou turbine, la suppression de l'intervention de maintenance générée par l'encrassement du moteur et/ou turbine.

L'invention trouve des applications pour l'outillage et les appareils électroportatifs de toute nature.

## Revendications

1. Dispositif de protection de poussières et autres matériaux pour appareils électroportatifs, comprenant un carter (11) de protection, s'adaptant autour du collecteur de l'appareil électroportatif, et ne présentant aucune ouverture ou évent susceptible de favoriser le prélèvement et l'introduction de poussières ou déchets à l'intérieur, et en ce que le carter s'ajuste par son extrémité avant sur la tête de l'appareil électroportatif et à l'opposé permet le maintien d'un flexible (12) de grande longueur à l'intérieur duquel est disposé le conduit électrique (13), charactérisé en ce que le flexible présente sur sa longueur une multitude de perforations (12a) établies dans son épaisseur, et en ce que le flexible reçoit intérieurement une garniture de mousse de polyuréthanne autorisant le passage d'un cordon électrique, et en ce que le nombre de perforations formées sur le flexible génère une surface additionnelle cumulée de passage d'air (y) supérieure à la section d'arrivée d'air (x) vers la turbine du groupe moteur.

2. Dispositif de protection selon la revendication 1, **caractérisé en ce que** les perforations (12a) sont établies dans une configuration en alignement ou autre, en une ou plusieurs lignes parallèles ou autres, en autorisant un passage d'air à l'intérieur du flexible (12).

## Claims

1. Device that protects from dust and other materials for portable electrical appliances, including a protective housing (11), that fits around the collector of the portable electrical appliance, and has no aperture or vent capable of allowing dust or waste products to be picked up or introduced inside, and in that the housing fits by its front end over the head of the portable electrical appliance and on the opposite side is used to hold in place a hose (12) of great length inside which is placed the electrical conduct (13), **characterized in that** the hose has over its length a multitude of perforations (12a) provided in the thickness thereof, and **in that** the hose accommodates internally a polyurethane foam lining for an electrical cord to be passed through, and **in that** the number of perforations formed on the hose generates an additional combined air passage surface (y) that is larger than the cross-section of the inlet bringing air (x) towards the turbine of the engine unit.

2. Protective device as claimed in claim 1, **characterized in that** the perforations (12a) are provided in a layout that is in alignment or the like, in one or more lines that are parallel or the like, allowing air to pass into the hose (12).

## Patentansprüche

1. Vorrichtung zum Schutz gegen Staub und sonstige Stoffe für tragbare Elektrogeräte mit einem Schutzgehäuse (11), das um den Kollektor des tragbaren Elektrogeräts herum angepasst wird und keine Öffnung bzw. Lüftungsloch aufweist, die/das die Entnahme und Einführung von Staub oder Abfallstoffen in das Innere begünstigen könnte, wobei das Gehäuse mit seinem vorderen Ende auf dem Kopf des tragbaren Elektrogeräts angepasst wird und auf der Gegenseite den Halt eines längeren Schlauches (12) ermöglicht, in dem die Stromleitung (13) angeordnet ist, **dadurch gekennzeichnet, dass** der Schlauch auf seiner Länge mehrere in der Materialdicke bestehende Lochungen (12a) aufweist und dass der Schlauch innen mit Polyurethanschaum ausgekleidet ist, der die Durchführung eines Stromkabels ermöglicht, und dass die Anzahl der am Schlauch ausgebildeten Lochungen eine zusätzliche kumulierte Oberfläche für den Luftdurchlass (y) erzeugt, die höher ist als der Querschnitt der Luftzuleitung (x) zur Turbine des Motoraggregats.

2. Schutzvorrichtung nach Anspruch 1, **dadurch gekennzeichnet, dass** die Lochungen (12a) in fluchtender Ausrichtung oder in einer sonstigen Konfiguration in einer oder mehreren parallelen oder sonstigen Linien ausgeführt sind und dabei einen Luftdurchlass innerhalb des Schlauchs (12) ermöglichen.
